(19) Europäisches Patentamt
European Patent Office
Office européen des brevets

(11) EP 3 939 914 A1

(12) EUROPÄISCHE PATENTANMELDUNG

(43) Veröffentlichungstag:
19.01.2022  Patentblatt 2022/03

(21) Anmeldenummer: 21182851.2

(22) Anmeldetag: 30.06.2021

(51) Internationale Patentklassifikation (IPC):
B65G 49/06 (2006.01)      C03B 27/04 (2006.01)
C03B 33/023 (2006.01)      C03B 33/033 (2006.01)

(52) Gemeinsame Patentklassifikation (CPC):
C03B 33/0235; B65G 49/064; C03B 27/04;
C03B 27/0413; C03B 33/033

(84) Benannte Vertragsstaaten:
AL AT BE BG CH CY CZ DE DK EE ES FI FR GB
GR HR HU IE IS IT LI LT LU LV MC MK MT NL NO
PL PT RO RS SE SI SK SM TR
Benannte Erstreckungsstaaten:
BA ME
Benannte Validierungsstaaten:
KH MA MD TN

(30) Priorität: 14.07.2020   DE 102020118532

(71) Anmelder: SCHOTT AG
55122 Mainz (DE)

(72) Erfinder:
• WEGENER, Holger
31061 Alfeld (DE)

• SCHWERTFEGER, Rainer
37632 Eschershausen (DE)
• MAEDJE, Michael
31073 Grünenplan (DE)
• DIEKMANN, Christian
31073 Grünenplan (DE)
• LANGER, Markus
31073 Grünenplan (DE)

(74) Vertreter: Blumbach · Zinngrebe Patentanwälte
PartG mbB
Alexandrastraße 5
65187 Wiesbaden (DE)

(54) VORRICHTUNG UND VERFAHREN ZUM LÄNGENSCHNITT BEI DÜNNGLÄSERN

(57) Die Erfindung sieht ein Verfahren zur Herstellung von Glasbandabschnitten vor, mit zumindest den folgenden Schritten:
- Transport eines Glasbandes mit einer Geschwindigkeit $v_1$, wobei die Geschwindigkeit $v_1$ abhängig von der vorgegebenen Glasdicke (di) ist, unter Anlegen einer Zugspannung parallel zu den Seitenrändern des Glasbandes, in einer Ebene $E_1$,
und Abkühlen des Glasbandes mit einer Abkühlrate, die abhängig von der vorgegebenen Glasdicke (di) ist,
- Einfügen eines Anritzes auf der Oberfläche des Glasbandes in zumindest einem Randbereich durch Ritzen der Glasoberfläche , wobei das Anritzen durch ein Ritzwerkzeug in einem Winkel $\alpha$ zur Transportrichtung des Glasbandes und Umlenkung des Glasbandes in eine Ebene $E_2$ zur Erzeugung einer Biegespannung,
- Abtrennung eines Glasbandabschnittes unter Bildung von Kanten durch Bruch des Glasbandes an der Verlängerung des quer zum Glasband laufenden Anritzes. Des Weiteren betrifft die Erfindung eine Vorrichtung zur Herstellung von Glasbandabschnitten.

Fig. 2

EP 3 939 914 A1

## Beschreibung

Die vorliegende Erfindung betrifft die Herstellung von Glasbandabschnitten aus Dünnstglas bzw. ultradünnem Glas, also von Gläsern mit einer Glasdicke im Bereich von 15 μm bis 150 μm durch Einfügen von Sollbruchlinien und anschließender Anlegung einer Biegespannung zum Abtrennen einzelner Glasbandabschnitte in Querrichtung eines Glasbandes. Weiterhin betrifft die Erfindung eine entsprechende Vorrichtung zur Herstellung von Glasbandabschnitten aus ultradünnem Glas.

## Beschreibung

Zum Schneiden bzw. Abtrennen von Gläsern werden im Allgemeinen Verfahren angewandt, bei welchen zunächst mit einem Anritzwerkzeug ein Anritz als Sollbruchstelle in der Glasoberfläche über die gesamte Breite des Glases erzeugt wird und anschließend durch Biegen des Glases eine Biegespannung angelegt wird, welche zum Bruch des Glases unter Ausbildung von Kanten entlang des Anritzes führt. Insbesondere bei Dünnstgläsern ist der Bruch durch seine hohe Geschwindigkeit jedoch schwer zu kontrollieren und durch Einbringen einer Energie, welche größer ist als die für die Bildung der Bruchkante benötigte Energiekann es hier leicht zu unkontrollierten Brüchen und Absplitterungen kommen kann.

Bei der Abtrennung von Glasbandabschnitten bzw. Glasplatten von einem kontinuierlichen Glasband wird zudem das Glasband quer zur Anritzrichtung bewegt, so dass die minimale zu erreichende Glasplattenlänge von der Vorschubgeschwindigkeit des Glases und der Zeitdauer des Schneidvorgangs abhängt. Die Zeitdauer des Schneidvorgangs ergibt sich hierbei durch die Zeiten für die Hin- und Rückfahrt der Schneidachse sowie der für die Aufsynchronisation des Schneidwerkzeugs benötigte Zeitdauer. Somit gibt es für jede Bandgeschwindigkeit ein kürzestes Tafelmaß, das nicht mehr zu unterschreiten ist.

Die Ziehgeschwindigkeit und damit die Vorschubgeschwindigkeit des Glasbandes nimmt dabei mit abnehmender Glasdicke zu. Für Dünngläser ergeben sich damit, abhängig von der jeweiligen Glasdicke, Vorschubgeschwindigkeiten von 0,5 bis 50 m/min, so dass beispielsweise für Gläser mit einer Dicke von 50 μm das kürzeste Schneidmaß oberhalb von 690 mm liegt. Bei Gläsern mit einer Dicke von 30 μm liegt das kürzeste Schneidmaß bereits oberhalb von 1000 mm. Gewünscht sind jedoch üblicherweise Glastafeln mit einer maximalen Länge von 500 mm.

Neben den oben beschriebenen großen kürzesten Schneidmaßen, ergibt sich durch die hohen Vorschubgeschwindigkeiten zudem das Problem, dass bei einem Anritz über die gesamte Glasbreite keine ausreichenden Schnittqualitäten sichergestellt werden kann.

In der DE 10 2014 013 262 A1 wird daher ein Schneideverfahren für Dünnglas beschrieben, bei dem der Anriss nicht über die gesamte Breite des Glasbandes, sondern lediglich im Randbereich ausgeführt wird. Weiterhin ist durch die Verwendung eines rotierenden Schneiddrahts eine Aufsynchronisation nicht notwendig, so dass insgesamt die Dauer des Schneidvorgangs verkürzt werden kann. Nach dem Anritzen werden durch Biegung des Glases die Kanten gebildet und der entsprechende Glasabschnitt wird vom Glasband abgetrennt und einem Sammelbehälter zugeführt. Nachteilig an dem in der DE 10 2014 013 262 A1 ist jedoch, dass keine exakte Einstellung der Biegespannung möglich ist. Weiterhin bietet die in der DE 10 2014 013 262 A1 beschriebene Vorrichtung keine Möglichkeit, die Glasbandabschnitte zu vereinzeln.

## Aufgabe der Erfindung

Der Erfindung liegt somit die Aufgabe zu Grunde, ein Verfahren zur Herstellung von Glasbandabschnitten aus ultradünnen Glas bereit zu stellen, welches die oben beschriebenen Nachteile nicht aufweist. Insbesondere soll mit dem erfindungsgemäßen Herstellungsverfahren auch die Herstellung von Glasbandabschnitten in Form von Glasscheiben mit variabler Länge und hohen Ausbeuten ermöglicht werden. Eine weitere Aufgabe der Erfindung liegt in der Bereitstellung einer Vorrichtung zur Herstellung von Glasbandabschnitten aus Dünnglas durch prozesssicheres maschinelles Teilen, insbesondere mit einer hohen Prozessausbeute.

## Kurzbeschreibung der Erfindung

Die Aufgabe wird bereits durch den Gegenstand der unabhängigen Ansprüche gelöst. Vorteilhafte Ausführungsformen und Weiterbildungen der Erfindung sind Gegenstand der Unteransprüche.

Die Erfindung sieht ein Verfahren zur Herstellung von Glasbandabschnitten mit zumindest den folgenden Schritten a) bis g) vor:

a. Heißformen eines kontinuierlichen Glasbandes mit einer vorgegebenen Glasdicke ($d_1$) im Bereich von 15 μm bis 150 μm aus einer Glasschmelze und Abkühlen des Glasbandes mit einer Abkühlrate, die abhängig von der vorge-

gebenen Glasdicke ($d_1$) ist,

b. Transport des Glasbandes mit einer Geschwindigkeit $v_1$ unter Anlegen einer Zugspannung parallel zu den Seitenrändern des Glasbandes,

c. Umlenken des Glasbandes in eine Ebene $E_1$,

d. Transport des Glasbandes in der Ebene $E_1$ mit der Geschwindigkeit $v_1$,

e. Einfügen eines Anritzes auf der Oberfläche des Glasbandes im Bereich zumindest einem Randbereich des Glasbandes durch Ritzen der Glasoberfläche, wobei das Anritzen durch ein Ritzwerkzeug in einem Winkel $\alpha$ zur Transportrichtung des Glasbandes erfolgt,

f. Führung des Glasbandes in eine Ebene $E_2$ zur Erzeugung einer Biegespannung, wobei das Glasband in der Ebene $E_2$ mit einer Geschwindigkeit $v_2$ transportiert wird, wobei die Ebenen $E_1$ und $E_2$ so zueinander angeordnet sind, dass das Glasband (4) beim Übergang von der ersten zur zweiten Transporteinheit einer Biegespannung ausgesetzt wird und der Biegeradius durch den Lageunterschied zwischen den Ebenen $E_1$ und $E_2$ und/oder die Differenz der Geschwindigkeiten $v_1$ und $v_2$ eingestellt wird und

g. Abtrennung eines Glasbandabschnittes unter Bildung von Kanten durch spontane Rissbildung des Glasbandes an der Verlängerung des quer zum Glasband laufenden Anritzes.

Gemäß einer Ausführungsform wird die Geschwindigkeit $v_1$ in Abhängigkeit zur gewünschten Glasdicke $d_1$ eingestellt.

Die Schritte c) und d) können unmittelbar nacheinander erfolgen, jedoch sind auch Ausführungsformen möglich, bei denen die Schritte c) und d) räumlich und/oder zeitlich voneinander getrennt ablaufen. So kann beispielsweise das Glasband (4) nach Schritt c) aufgewickelt und eine so entstandene Rolle zu einem späteren Zeitpunkt den Schritten d) bis g) zugeführt werden.

Die Ebenen $E_1$ und $E_2$ sind so zueinander angeordnet, dass das Glasband (4) beim Übergang von der ersten zur zweiten Transporteinheit einer Biegespannung ausgesetzt wird. Insbesondere weisen die beiden Ebenen $E_1$ und $E_2$ unterschiedliche Lagen auf. Vorzugsweise weisen die Ebenen $E_1$ und $E_2$ einen Offset auf. Alternativ oder zusätzlich weisen die beiden Ebenen $E_1$ und $E_2$ einen Winkeloffset auf. Bei Ausführungsformen mit einem Offset zwischen den beiden Ebenen $E_1$ und $E_2$ weisen diese einen Höhenunterschied $\Delta h$ in z-Richtung auf. Die z-Richtung bezeichnet im Sinne dieser Offenbarung die vertikale Richtung. Unterschiedliche z-Koordinaten bezeichnen demnach unterschiedliche Höhen Vorzugsweise ist die Ebene $E_2$ hierbei unterhalb der Ebene E1 angeordnet. Insbesondere ist der Höhenunterschied $\Delta h$ als Stufe ausgebildet. Gemäß einer bevorzugten Ausführungsform weisen die beiden Ebenen E1 und E2 einen Höhenunterschied $\Delta h$ auf und sind parallel zueinander ausgerichtet, d.h. sie weisen keinen Winkeloffset zueinander auf.

Gemäß einer Ausführungsform erfolgt nach dem Schritt g) im Schritt h) die Separation des Glasbandabschnittes vom Glasband durch Transport mit der Geschwindigkeit $v_2$, wobei für die Geschwindigkeiten vorzugsweise gilt $v_2 \geq v_1$. Abhängig vom Lageunterschied der beiden Ebenen $E_1$ und $E_2$, beispielsweise wenn die beiden Ebenen einen relativ großen Höhenunterschied $\Delta h$ aufweisen, kann die Separation des Glasbandabschnittes vom Glasband auch dann erfolgen, wenn die Geschwindigkeit $v_2$ kleiner ist als die Geschwindigkeit $v_1$.

Alternativ oder zusätzlich kann in einer anderen Ausführungsform der Erfindung eine Separation der einzelnen Glasbandabschnitte voneinander durch Transport mit einer Geschwindigkeit $v_3$ erfolgen, wobei für die Geschwindigkeit $v_3$ gilt: $v_3 > v_1$.

Die Randbereiche des Glasbandes können als Bortenbereiche ausgebildet sein. Als Bortenbereiche werden hierbei die wulstartigen Verdickungen an den beiden Rändern in Längsrichtung des Glasbandes verstanden. Innerhalb der Bortenbereiche weist das Glasband eine Glasdicke $d_2$ auf, welche größer ist als die Dicke $d_1$ in der Mitte des Glasbandes. Insbesondere gilt für die Dicke der Bortenbereiche $d_2$ und für die Glasdicke des Glasbandes $d_1$: $d_2 > 4\,d_1$.

In einer Ausführungsform der Erfindung weist das Glasband zwei Bortenbereiche auf und in Schritt e) erfolgt der Anritz in zumindest einem Bortenbereich des Glasbandes. Das Anritzen im Bortenbereich ist besonders vorteilhaft, da das Glasband in diesen Bereichen auf Grund der größeren Glasdicke eine höhere mechanische Festigkeit aufweisen als im Glasmittenbereich.

Die Geschwindigkeit $v_1$, mit der das Glasband in Schritt d) transportiert wird, wird abhängig von der gewünschten Glasdicke eingestellt und entspricht der Ziehgeschwindikeit der Formgebungsvorrichtung. Das Glasband wird hierbei in einer Ebene $E_1$ in y-Richtung gezogen, wobei eine Zugspannung parallel zu den Glasborten angelegt wird. Die in der Ebene $E_1$ aufgebrachte Zugspannung entspricht hierbei nicht der Ziehkraft in beim Heißformprozess in Schritt b), da in Schritt d) lediglich die Kraft für den Transport in y-Richtung, d.h. den Horizontaltransport aufgebracht werden muss. Gemäß einer Ausführungsform wird das Glasband in Schritt a) in einem Down-Draw-Verfahren schnell gezogen, vorzugsweise mit einer Geschwindigkeit im Bereich von 1 m/min bis 50 m/min. Das Verfahren ist jedoch nicht auf Down-Draw-Verfahren beschränkt. Möglich ist beispielsweise auch ein Ziehen im Overflow-Fusion-Verfahren oder weitere Verfahren, die geeignet sind, dünne Glasbänder herzustellen.

In Schritt a) erfolgt das Abkühlen des Glasbandes gemäß einer Variante passiv, d.h. die Wärme wird durch Konvektion bzw. Wärmestrahlung an die Umgebung abgegeben. Die Abkühlrate ist hierbei abhängig von der vorgegebenen Glasdicke.

Eine alternative Ausführungsform sieht vor, dass das Glasband in Anschluss an die Formgebung aktiv gekühlt wird, wobei insbesondere Abkühlraten von zumindest 10 K/s verwendet werden. Die Abkühlrate kann jedoch auch deutlich größer sein. So sieht eine Ausführungsform der Erfindung vor, dass die Abkühlrate zumindest 40 K/s beträgt. Mit vorgegebener kleinerer Dicke des Glasbandes wird die Abkühlrate erhöht. Gemäß einer Weiterbildung der Erfindung wird in Schritt b) mit einer dickenabhängigen Abkühlrate abgekühlt, wobei die Abkühlrate im Bereich von $(1/d)*5 \,K/min*\mu m$ bis $(1/d)*280 \,K/min*\mu m$ liegt. Gemäß einer bevorzugten Ausführungsform liegt die Abkühlrate im Bereich von 120 bis 260 $K/min*\mu m$. Vorzugsweise erfolgt in dieser Ausführungsform das Abkühlen des Glasbandes geregelt in einem Kühlofen, insbesondere mit Heiz-Kühlelementen. Hierzu kann die Vorrichtung vor der ersten Transportvorrichtung einen Kühlofen aufweisen.

Die Erfinder haben hierbei überraschenderweise festgestellt, dass sich eine schnelle Abkühlung vorteilhaft auf das Trennverfahren auswirkt. Eine schnelle Abkühlung führt dabei zum Aufbau einer Druckspannung in den Glasoberflächen. So führt die Druckspannung im Glas dazu, dass beim Anritzen in Schritt e) der entstandene Riss nicht spontan in x-Richtung weiterläuft, sondern der Bruch am Riss erst in Schritt f) bei Anlegen einer Biegespannung erfolgt und somit besser kontrolliert werden kann. Während bei konventionellen Schneideverfahren eine Druckspannung nachteilig ist, führt der Aufbau der Druckspannung im erfindungsgemäßen Verfahren somit zu einer verbesserten Kontrolle des Trennprozesses und somit auch zu einer erhöhten Prozessausbeute.

Im nachfolgenden Schritt c) wird das Glasband umgelenkt. Gemäß einer Ausführungsform wird es dabei so umgelenkt, dass es nicht länger vertikal, d.h. in z-Richtung, sondern in y-Richtung transportiert wird. In Schritt d) erfolgt dabei ein Transport des Glasbandes in einer Ebene $E_1$. Die Transportgeschwindigkeit entspricht hierbei der Ziehgeschwindigkeit $v_1$.

Die Abtrennung des Glasbandabschnittes unter Ausbildung von Kanten vom Glasband erfolgt in den Schritten e) bis h) durch Anritzen des Glasbandes in zumindest einem Bortenbereich und Anlegen einer Biegespannung. Hierdurch kommt es zu einem Spontanabbruch des Glasbandabschnittes vom Glasband durch eine spontane Risspropagation, wobei der Bruch bzw. Riss entlang der Hauptspannungslinie verläuft. In Schritt e) erfolgt daher ein Anritzen des Glasbandes in zumindest einem Randbereich des Glasbandes, vorzugsweise in zumindest einem Bortenbereich des Glasbandes. Unter den Randbereichen werden hierbei die Bereiche in Nähe der Kanten des Glasbandes verstanden. Der Anritz weist einen Winkel $\alpha$ zur Transportrichtung bzw. Zugrichtung des Glasbandes auf. Nach Anlegen der Biegespannung erfolgt somit der Abbruch im Winkel $\alpha$ zur Hauptzugsrichtung. Um rechtwinklige oder zumindest weitgehend rechtwinklige Glasbandabschnitte zu erhalten, liegt der Winkel $\alpha$ bevorzugt in einem Bereich von 80 bis 100°. Insbesondere beträgt der Winkel $\alpha$ 90°.

Beim erfindungsgemäßen Verfahren ist es nicht notwendig, vor Anlegen der Biegespannung eine Quer-Sollbruchlinie zu erzeugen, welche sich über die gesamte Breite des Glasbandes erstreckt. Vielmehr ist ein Anritzen in einem der beiden Bortenbereiche des Glasbandes mit geringen lateralen Ausdehnungen, um nach Anlegen einer Biegespannung eine Bruchkante zu erhalten, die einen Winkel $\alpha$, vorzugsweise einen Winkel $\alpha$ von 90°, zur Hauptzug- bzw. Transportrichtung des Glasbandes aufweist. Da der Riss entlang der Biegekante propagiert und diese einen Winkel von 90° zur Transportrichtung aufweist, können rechtwinklige oder zumindest weitgehend rechtwinklige Glasbandabschnitte auch dann erhalten werden, wenn der Winkel $\alpha$ von 90° abweicht. Gemäß einer bevorzugten Ausführungsform liegt die Länge des Risses im Bereich von 2 bis 6 mm.

Durch die geringe laterale Ausdehnung des Anritzes werden die Zeiten für Hin- und Rückfahrt der Schneidachse erheblich reduziert. Bei Verwendung eines aufsynchronisierten Schneidwerkzeugs wird zudem auch die Dauer der Synchronfahrt verringert. Durch die somit deutlich verkürzte Prozessdauer des Anritzprozesses wird ein Verfahren bereitgestellt, welches auch bei hohen Bandgeschwindigkeiten kurze Schneidmaße ermöglichen. So können mit dem erfindungsgemäßen Verfahren Glasscheiben mit einer Glasdicke im Bereich von 15 $\mu m$ bis 150 $\mu m$ hergestellt werden, welche ein Schneidmaß von lediglich 500 mm oder sogar weniger als 500 mm aufweisen.

Gemäß einer Weiterbildung der Erfindung wird in Schritt e) ein Ritzwerkzeug verwendet, welches in einem Winkel $\beta$ zur Borte angestellt wird. Der Winkel $\beta$ wird dabei abhängig von der Transportgeschwindigkeit $v_1$ so eingestellt, dass die Bewegung des Glasbandes in y-Richtung durch die Transportgeschwindigkeit $v_1$ während des Ritzvorganges kompensiert wird. Der Winkel $\beta$ wird hierbei insbesondere so an die Zug- bzw. Transportgeschwindigkeit des Glasbandes $v_1$ und die Schnittgeschwindigkeit des Anritzwerkzeugs $v_{ritz}$ angepasst, dass der Anritz einen Winkel $\alpha$ im Bereich von 80 bis 100° aufweist. Hierbei gilt für den einzustellenden Winkel $\beta$: $\beta = arccos(v_1/v_{ritz})$ Auf eine Synchronfahrt des Ritzwerkzeugs mit dem Glasband kann daher in dieser Weiterbildung der Erfindung verzichtet werden, so dass die Prozessdauer in Schritt e) zusätzlich verkürzt werden kann.

Alternativ oder zusätzlich sieht eine andere Weiterbildung der Erfindung die Verwendung eines elastischen Werkzeugträgers vor. Durch die Elastizität des Werkzeugträgers ist das Anritzwerkzeug so flexibel, dass es sich den Differenzgeschwindigkeiten der Glasoberfläche quer zur Schneidrichtung anpassen kann und somit keine Aufsynchronisation notwendig ist. Gemäß einer vorteilhaften Ausführungsform wird das Anritzwerkzeug hierbei in einem Winkel $\beta$ im Bereich von 40 bis 70° zur Borte angestellt. Die große Toleranz des Winkels $\beta$ zum Winkel $\alpha$ wird hierbei durch die Elastizität der Anritzvorrichtung ermöglicht. Vorzugsweise erfolgt gemäß dieser Weiterbildung daher ebenfalls keine Aufsynchronisation des Ritzwerkzeugs mit dem Glasband.

Das in Schritt e) angeritzte Glasband wird in einem nachfolgenden Schritt f) einer Biegespannung ausgesetzt. Die Biegespannung wird hierbei dadurch erreicht, dass das Glasband von der Ebene $E_1$ mit einer Geschwindigkeit $v_1$ in eine Ebene $E_2$ geführt wird. Die Ebenen $E_1$ und $E_2$ weisen hierbei unterschiedliche Lagen auf. So können die Ebenen $E_1$ und $E_2$ einen Offset, d.h. eine Höhendifferenz $\Delta h$ aufweisen. Vorzugsweise liegt in dieser Ausführungsform die Ebene $E_2$ unterhalb der Ebene $E_1$, das Glasband wird somit in z-Richtung nach unten geführt und erfährt durch die Schwerkraft eine Biegung. Eine weitere Ausführungsform sieht vor, dass die Ebenen E1 und E2 einen Winkel zueinander aufweisen. Hierbei kann zusätzlich ein Offset in Form einer Höhendifferenz vorliegen. Weiterhin können sich die die Geschwindigkeiten $v_1$ und $v_2$, mit denen das Glasband in den Ebenen $E_1$ und $E_2$ transportiert wird unterscheiden. Durch die Wahl der Geschwindigkeit $v_2$ bzw. die Geschwindigkeitsdifferenz zwischen den Transportgeschwindigkeiten $v_1$ und $v_2$ kann hierbei der Biegeradius beeinflusst werden. Für die Geschwindigkeit $v_2$ gilt insbesondere $v_2 > 0$. Gemäß einer bevorzugten Auführungsform gilt hierbei $v_1 < v_2$. Hierdurch wird auch eine Separation des Glasbandabschnittes vom Glasband sowie eine Separation der einzelnen Glasplatten untereinander ermöglicht. Alternativ kann jedoch für die Geschwindigkeiten $v_1$ und $v_2$ gelten: $v_1 = v_2$.

Gemäß einer Ausführungsform der Erfindung sind die Transportvorrichtung als Gurtbänder ausgebildet, welche über Umlenkrollen geführt werden. In diesen Ausführungsformen wird der minimale Biegeradius durch den Radius der Umlenkrollen D1 der ersten Transportvorrichtung vorgegeben. Durch Variation des Offsets der Ebenen $E_1$ und $E_2$, beispielsweise durch Variation des Höhenunterschiedes $\Delta h$ und/oder der Differenz der Geschwindigkeiten $v_1$ und $v_2$ kann eine Feineinstellung des Biegeradius und somit der angelegten Biegespannung erfolgen.

Gemäß einer Ausführungsform der Erfindung beträgt der Höhenunterschied $\Delta h$ der beiden Ebenen $E_1$ und $E_2$ 75 bis 225 mm, vorzugsweise 150 bis 200 mm. Je größer der Höhenunterschied $\Delta h$ gewählt wird, desto besser legt sich das Glas an den vorgegebenen Biegeradius D1 an und desto größer ist der zeitliche Verzug zum vorherigen Glasbandabschnitt. Ein größerer zeitlicher Verzug und somit Abstand zum vorherigen Glasbandabschnitt wiederum ermöglicht, dass die zweite Transporteinrichtung mit einer geringeren Geschwindigkeit $v_2$ laufen kann. Dies wiederum bewirkt, dass sich das Glasband noch besser an die Umlenkrollen anlegen kann und sich somit der tatsächliche Biegeradius dem minimalen Biegeradius D1 weiter annähern kann.

Insbesondere gilt für das Verhältnis der beiden Geschwindigkeiten $v_1/v_2$, dass dieses im Bereich von 0,95 bis 1,05, vorzugsweise im Bereich von 0,9 bis 1,1 liegt.

In einer Weiterbildung der Erfindung erfolgt das Anritzen in zumindest einem der beiden Bortenbereichen von der innen liegenden Seite des Bortenbandes in Richtung des Seitenrandes bzw. der Seitenkante des Glasbandes. Hierbei kann sowohl lediglich einer der beiden Bortenbereiche angeritzt werden oder es werden beide Bortenbereiche des Glasbandes angeritzt. Bevorzugt ist ein nur einseitiges Anritzen. Die Glasborte weist ein charakteristisches Querschnittsprofil auf, bei dem die Glasdicke von innen nach außen in Richtung der Glasbandränder langsam ansteigt. Durch ein Anritzen von innen nach außen folgt das Ritzwerkzeug diesem Anstieg.

Insbesondere bei sehr dünnen Glasbändern reicht bereits das Eigengewicht des Glasbandes aus, um durch die Schwerkraft eine Biegung des Glasbandes beim Übergang von der ersten Ebene $E_1$ zur zweiten Ebene $E_2$ zu erzielen. Eine Weiterbildung der Erfindung sieht vor, dass in Schritt f) der Biegeradius des Glasbandes zusätzlich durch Kontakt des Glasbandes mit zumindest einem Führungsrad eingestellt wird. Der Kontaktpunkt A zwischen dem Glasband und dem Führungsrad liegt hierbei vorzugsweise in der Ebene $E_1$. Das Führungsrad oder die Führungsräder werden hierbei vorzugsweise im Bereich der Borten des Glasbandes positioniert. Das Führungsrad wird mit einer Umlaufgeschwindigkeit $v_{Rad}$ angetrieben, wobei die Umlaufgeschwindigkeit $v_{Rad}$ schneller ist als die Transportgeschwindigkeit $v_1$ der ersten Transporteinrichtung, so dass es bei Berührung des Glasbandes mit dem Führungsrad nicht zu einem Stoppimpuls kommen kann.

Mit der oben beschriebenen Weiterbildung der Erfindung ist insbesondere bei der Zerteilung relativ dicker Glasbänder mit einer Dicke im Bereich von 80 bis 150 $\mu$m vorteilhaft. Bei Glasbändern im vorstehend genannten Dickenbereich kann die Steifigkeit des Glases dazu führen, dass es bei Biegeprozessen alleine durch die Schwerkraft, d. h. ohne weitere mechanische Hilfen, nicht oder zu spät zur Biegung kommt. Durch oben beschriebene Weiterbildung kann somit auch bei dickeren Gläsern, insbesondere bei Gläsern mit einer Dicke im Bereich von 80 bis 150 $\mu$m der Biegeradius und die Beigespannung präzise eingestellt werden.

Eine andere Ausführungsform sieht vor, dass in einem dem Schritt d) nachgelagerten Schritt i) die Bortenbereiche des Glasbandabschnittes entfernt werden. Dies kann insbesondere durch ein Laserschnittverfahren erfolgen. Entsprechende Glasbandabschnitt ohne Borten können beispielsweise aufgerollt werden. Hierbei werden gemäß einer Ausführungsform die Bortenbereiche im Bereich der Ebene $E_2$, d.h. nach der Bruchkantenbildung quer zur Transportrichtung entfernt. Dies bietet den Vorteil, dass der Anritz im Bortenbereich erfolgen kann. Eine andere Ausführungsform sieht dagegen vor, dass die Borten vor Schritt e) entfernt werden. Bei diesen Ausführungsformen erfolgt der Anritz in den Randbereichen des bortenlosen Glasbandes.

Die Schritte f) bis h) des Herstellungsverfahrens werden vorzugsweise mehrfach wiederholt, so dass entsprechend mehrere Glasbandabschnitte erzeugt werden. Die einzelnen Glasbandabschnitte werden gemäß einer Weiterbildung der Erfindung in einem dem Schritt h) nachfolgenden Schritt j) maschinell verpackt. Hierbei werden die Glasbandabschnitte durch eine dritte Transportvorrichtung mit einer Transportgeschwindigkeit $v_3$ einer Verpackungsstation zugeführt.

Gemäß einer Variante der Erfindung erfolgt der Transport der einzelnen Glasbandabschnitte von der dritten Transportvorrichtung zur Verpackungsstation vorzugsweise mit Hilfe von Robotern auf eine Abstapelplattform der Verpackungsstation. Hierbei werden auf der Abstapelplattform abwechselnd Glasbandabschnitte und Papierabschnitte gestapelt. Vorzugsweise wird der Papierabschnitt in Form eines Papierbogens von einer Papierzuführeinrichtung mit Hilfe eines weiteren Roboters auf den oberen Glasbandabschnitt der Abstapelplattform platziert. Während des Transfers der Glasband- und Papierabschnitte bewegt sich die Abstapelplattform bei jedem Transfer um die den Betrag der Glasbandabschnittsdicke bzw. der Papierabschnittsdicke nach unten.

Gemäß einer vorteilhaften Ausführungsform der Erfindung erfolgt der Transfer des Glasbandabschnittes von der dritten Transportvorrichtung zur Abstapelplattform über eine poröse Platte, insbesondere über eine poröse Platte aus Kunststoff, an die ein Vakuum angelegt wird. Somit wird eine gleichmäßige Ansaugung des Glasbandabschnitts gewährleistet und vermieden, dass punktuell hohe Saug- bzw. Zugkräfte auf den Glasbandabschnitt wirken. Somit können auch sehr dünne Glasabschnitte ohne Bruchgefahr von der dritten Transportvorrichtung zur Abstapelplattform transferiert werden.

Eine andere Variante der Erfindung sieht dagegen vor, dass der in Schritt g) erhaltene Glasbandabschnitt eine Länge im Bereich von 100 bis 200 m, vorzugsweise im Bereich von 100 bis 1000 m aufweist und der Glasbandabschnitt in einem dem Schritt h) nachfolgenden Schritt k) gemeinsam mit einem Papierband aufgerollt wird. Insbesondere bietet sich diese Variante für Glasbandabschnitt an, bei denen in einem vorherigen Verfahrensschritt die Bortenbereiche entfernt wurden.

Weiterhin ist eine Vorrichtung zur Herstellung von Glasbandabschnitten mit einer vorgegebenen Dicke d1 im Bereich von 15 $\mu$m bis 150 $\mu$m, insbesondere für das oben beschriebene, erfindungsgemäße Verfahren, Gegenstand der Erfindung. Die Vorrichtung umfasst hierbei zumindest zwei, vorzugsweise drei Transportvorrichtungen zum Transport des Glasbandes, wobei die Transportvorrichtungen eine Breite $b_1$ aufweisen, die größer als die Breite $b_2$ des Glasbandes ist sowie mindestens eine Vorrichtung zum Anritzen des Glasbandes im Bereich der ersten Transportvorrichtung.

Als Transportvorrichtungen haben sich insbesondere Gurtbänder als vorteilhaft herausgestellt. Dadurch, dass die Breite $b_1$ der Gurtbänder größer ist als die Breite $b_2$ des Glasbandes, bieten die Gurtbänder dem Glasband eine vollflächige Auflage. Die einzelnen Gurtbänder werden hierbei unabhängig voneinander angetrieben. Dies ermöglicht, dass die Geschwindigkeiten der einzelnen Glasbänder voneinander unabhängig eingestellt werden können. Die Gurtbänder werden durch Umlenkrollen geführt. Der Durchmesser der Umlenkrollen definiert hierbei gleichzeitig den kleinstmöglichen Biegeradius. Als besonders vorteilhaft haben sich hierbei Umlenkrollen mit einem Durchmesser im Bereich von 40 bis 150 mm herausgestellt.

In der Vorrichtung ist die zweite Transportvorrichtung bzw. das zweite Gurtband nach der ersten Transportvorrichtung und gegebenenfalls vor der dritten Transportvorrichtung angeordnet. Der Transport des Glasbandes erfolgt hierbei von der ersten Transportvorrichtung zur zweiten Transportvorrichtung. Somit ist die zweite Transportvorrichtung in Zugrichtung hinter der ersten Transportvorrichtung und die dritte Transportvorrichtung in Zugrichtung hinter der zweiten Transportvorrichtung angeordnet. Erste und zweite Transportvorrichtung sind dabei so zueinander angeordnet, dass im Glasband beim Transport von der ersten zur zweiten Transportvorrichtung einer Biegespannung aufgebaut wird.

Die erste Transportvorrichtung weist eine Geschwindigkeit $v_1$ auf, wobei $v_1$ der Geschwindigkeit der Ziehmaschine entspricht und die zweite Transportvorrichtung weist eine Geschwindigkeit $v_2$ auf. Gemäß einer Ausführungsform der Erfindung werden die Geschwindigkeiten der einzelnen Transportvorrichtungen so eingestellt, dass sich die Geschwindigkeiten der ersten und der zweiten Transportvorrichtung voneinander unterscheiden. Alternativ können erste und zweite Transportvorrichtung auch die gleiche Geschwindigkeit aufweisen.

Bei Ausführungsformen mit einer dritten Transportvorrichtung weist diese eine Geschwindigkeit $v_3$ auf. Vorzugsweise ist die Geschwindigkeit $v_3$ der dritten Transportvorrichtung hierbei größer als die Geschwindigkeit $v_1$ der ersten Transportvorrichtung. Hiermit wird sichergestellt, dass die Bruchkanten der einzelnen Glasbandabschnitte nicht aneinanderstoßen. Die dritte Transportvorrichtung läuft hierbei zumindest so viel schneller als die erste Transportvorrichtung, dass es zu einer ausreichenden Separation der einzelnen Glasbandabschnitte kommt. Eine ausreichende Separation ist hierbei wichtig für einen nachfolgenden Verpackungsprozess.

Gemäß einer vorteilhaften Ausführungsform ist im Bereich der ersten Transportvorrichtung eine Inspektionsanlage angeordnet, mit deren Hilfe Defekte im Glasband detektierte werden können. Wird ein Defekt im Glasband festgestellt, so kann der entsprechende Bereich des Glasbandes durch die oben beschriebenen Ablängprozesse herausgeschnitten bzw. die entsprechenden schadhaften Glasplatten in den nachfolgenden Prozessschritten aussortiert werden.

Alternativ oder zusätzlich sieht eine weitere Ausführungsform vor, dass im Bereich der ersten Transportvorrichtung eine Vorrichtung zur Dickenmessung des Glasbandes angeordnet ist. Eine Weiterbildung sieht vor, dass das Glasband mit einer Vorrichtung zum Heißformen eines kontinuierlichen Glasbandes aus einer Glasschmelze mittels einer Ziehmaschine erzeugt wird und die Vorrichtung zur Dickenmessung so mit der Vorrichtung zum Heißformen verbunden ist, dass die Ziehgeschwindigkeit der Ziehmaschine in Abhängigkeit von der gemessenen Glasdicke geregelt wird.

Im Bereich der ersten Transportvorrichtung bzw. des ersten Gurtbandes ist zumindest eine Vorrichtung zum Anritzen des Glasbandes angeordnet, wobei die Vorrichtung zum Anritzen vorzugsweise im Endbereich der ersten Transportrichtung, an den sich die zweite Transportvorrichtung anschließt, angeordnet ist.

Die Anritzvorrichtung ist so ausgerichtet, dass der Anritz in einem Winkel $\alpha$ im Bereich von 80 bis 100°, vorzugsweise in einem Winkel von 90°, zur Transportrichtung des Glasbandes erfolgt. Durch die geringe Länge des Anritzes entfallen die Zeiten für Hin- und Rückfahrt fast vollständig. Auch die Zeit einer Synchronfahrt verkürzt sich entsprechend. Somit können auch bei hohen Bandgeschwindigkeiten kurze Glasbandabschnitte bzw. Glastafeln oder Glasplatten erzeugt werden. Vorzugsweise ist das Anritzwerkzeug so positioniert, dass das Glasband im Randbereich des Glasbandes bzw. im Bereich einer Borte geritzt wird. Gemäß einer Ausführungsform weist der Anritz eine laterale Ausdehnung im Bereich von 2 bis 6 mm auf. Der Anritz ist somit 2 bis 6 mm lang.

In einer Ausführungsform weisen die erste und die zweite Transportvorrichtung weisen in z-Richtung, d.h. senkrecht zur Transportrichtung, eine Höhendifferenz $\Delta h$ auf, wobei die zweite Transportvorrichtung tiefer liegt als die erste Transportvorrichtung. Die Höhendifferenz $\Delta h$ ist gemäß einer Ausführungsform der Erfindung als Stufe ausgebildet. Vorzugsweise liegt die Höhendifferenz $\Delta h$ im Bereich von 75 bis 225 mm. Bevorzugt weisen die Ebenen $E_1$ und $E_2$ hierbei keinen Winkelunterschied auf.

Durch die Höhendifferenz $\Delta h$ zwischen der ersten und der zweiten Transportvorrichtung wird das Glasband beim Übergang von der ersten zur zweiten Transportvorrichtung einer Biegespannung ausgesetzt. Diese bewirkt die Ausbildung einer Bruchkante durch spontane Risspropagation ausgehend vom Anritz entlang der Hauptzugspannung. Durch den Winkel $\alpha$ wird somit ein rechtwinkliger Glasbandabschnitt unter Ausbildung von Kanten gebildet.

Die Biegespannung kann hierbei durch die jeweilige Höhendifferent $\Delta h$ zwischen der ersten und der zweiten Transportvorrichtung sowie durch die Differenz der Geschwindigkeiten $v_1$ und $v_2$ der ersten und der zweiten Transportvorrichtung eingestellt werden. Hierbei kann über die Geschwindigkeiten $v_1$ und $v_2$ bzw. über die Geschwindigkeitsdifferenz der Biegeradius des Glasbandes beim Übergang von der ersten zur zweiten Transportvorrichtung eingestellt werden. Weist die zweite Transportvorrichtung eine Geschwindigkeit auf, die geringer ist als die Geschwindigkeit der ersten Transportvorrichtung, so bildet sich ein relativ kleiner Biegeradius aus. Läuft die erste Transportvorrichtung dagegen langsamer als die zweite Transportvorrichtung, so wird ein größerer Biegeradius gebildet.

Alternativ oder zusätzlich können erste und zweite Transportvorrichtung auch einen Winkeloffset aufweisen.

Die Vorrichtung zum Anritzen des Glasbandes ist gemäß einer Weiterbildung derart ausgestaltet, dass auf eine Synchronfahrt verzichtet werden kann. Durch den Wegfall der Synchronfahrt kann die Zeitdauer des Schneidprozesses nochmals verringert werden. Der Wegfall der Synchronfahrt kann auf unterschiedliche Weise realisiert werden. So sieht eine Ausführungsform vor, dass die Anritzvorrichtung in einem Winkel $\beta$ zur Transportrichtung des Glasbandes aufgesetzt wird. Hierbei wird der Winkel $\beta$ abhängig von der Transportgeschwindigkeit $v_1$ der ersten Transportvorrichtung so eingestellt, dass der erzeugte Anriss einen Winkel $\alpha$ im erfindungsgemäßen Bereich zur Transportrichtung des Glasbandes aufweist.

Eine weitere Anritzvorrichtung, welche keine Synchronfahrt benötigt, weist ein Werkzeug zum Anritzen auf einem elastischen Werkzeugträger auf. Der elastische Werkzeugträger ist auf einer rotierenden Scheibe angeordnet. Insbesondere ist der Werkzeugträger als elastischer Arm ausgebildet. Als Werkzeug zum Anritzen kann beispielsweise ein Diamanten oder Diamantenstaub, der auf dem Werkzeugträger aufgebracht ist, verwendet werden. Zum Anritz der Borte macht die rotierende Scheibe eine 360°-Drehung, wobei der elastische Arm mit dem Diamanten oder Diamantstaub gerade eben die Borte berührt. Durch den elastischen Arm kann das Anritzwerkzeug mit dem Glasband mitlaufen, so dass ein schräge Achse gebildet wird. Durch den elastischen Arm weist dieses Anritzwerkzeug somit mehr Freiheitsgrade auf ein als statisches Anritzwerkzeug. Gemäß einer Ausführungsform wird der elastische Werkzeugträger in einem Winkel $\beta$ im Bereich von 40 bis 70° zur Zugrichtung des Glasbandes bzw. zu den Borten des Glasbandes angestellt.

Eine Variante der Vorrichtung sieht vor, dass die Vorrichtung am Ende der ersten Transportvorrichtung eine Vorrichtung zum maschinellen Umlenken des Glasbandes aufweist. Die Umlenkvorrichtung umfasst vorzugsweise zumindest zwei Führungsräder. Die Führungsräder oder Führungsrolle befinden sich gelagert auf einer gemeinsamen Welle, welche über einen eigenen Antrieb verfügt. Hierbei kann gemäß einer Ausführungsform die Welle in der Höhe und in ihrem Abstand zur Stufe zwischen erster und zweiter Transportvorrichtung eingestellt werden. Hierbei führt die Umlenkvorrichtung eine 360°-Drehbewegung mit einer Drehbewegung und einer Umlaufgeschwindigkeit $v_{Rad}$ dreht. Die Umlaufgeschwindigkeit $v_{Rad}$ wird dabei vorzugsweise so eingestellt, dass sie größer als die Transportgeschwindigkeit $v_1$ der ersten Transpostvorrichtung ist, so dass ein Stoppimpuls bei Berührung des Glasbandes vermieden wird. Durch die zusätzliche mechanische Umlenkung des Glasbandes lassen sich somit auch Glasbänder im Dickenbereich von 80 bis 150 $\mu$m, bei denen auf Grund der Steifigkeit des Glasbandes eine Biegung alleine durch die Schwerkraft es nicht oder zu spät zu einer Biegung kommt, mit einem vorgegebenen Beigeradius biegen.

Gemäß einer Weiterbildung der Erfindung weist die Vorrichtung im Bereich der ersten oder der zweiten Transportvorrichtung eine Vorrichtung zur Abtrennung der Glasborten auf. Vorzugsweise ist diese Vorrichtung zur Abtrennung der Borten mittels Lasertrennung ausgebildet.

Eine Weiterbildung der Vorrichtung umfasst eine dritte Transportvorrichtung und im Bereich der dritten Transportvorrichtung zumindest zwei Verpackungsstationen. Hierbei aufgrund der relativ hohen Prozessgeschwindigkeit und insbesondere der Geschwindigkeit $v_3$ der dritten Transportvorrichtung zumindest zwei Verpackungsstationen notwendig, die abwechselnd die einzelnen Glasbandabschnitte bzw. die einzelnen Glasplatten von der dritten Transportvorrichtung abstapeln. Jede Verpackungsstation umfasst vorzugsweise zumindest zwei Roboter, eine Abstapelplattform und eine Papierzuführanlage. Der erste Roboter stapelt hierbei einen Glasbandabschnitt von der dritten Transportvorrichtung auf die Abstapelplattform. Der zweite Roboter platziert einen Papierbogen, der zuvor von der Papierzuführvorrichtung bereitgestellt wurde, auf den obersten Glasbandabschnitt bzw. auf die oberste Glastafel der Abstapelplattform. Die Abstapelplattform ist hierbei in z-Richtung beweglich und bewegt sich nach jedem Stapelvorgang um den Dickenbetrag der Glastafel- und Papierdicke nach unten. Auf diese Weisen können Glas-Papierstapel von 100 bis 500 Stück erzeugt und nachfolgend der Endverpackung zugeführt werden.

Vorzugsweise umfasst der erste Roboter der Verpackungsstation zum Abheben der Glasplatten über eine poröse Platte, vorzugsweise eine poröse Kunststoffplatte, an die ein Unterdruck angelegt wird.

Gemäß einer Ausgestaltung der Vorrichtung weist diese am Ende der dritten Transportvorrichtung einen Scherbentrichter auf, in den Glastafeln mit Glasfehlern geführt werden. Durch den Scherbentrichter gelangen diese in einen Sammelbehälter unterhalb der Fertigungsebene. Innerhalb der Fertigungsebene herrscht hierbei ein höherer Luftdruck, so dass kein Glasstaub vom Sammelbehälter in die Fertigungsebene gelangt.

In einer anderen Ausgestaltung der Vorrichtung weist diese im Bereich der dritten Transportvorrichtung eine Verpackungsstation auf, in der der Glasbandabschnitt gemeinsam mit einer Papierrolle aufgerollt wird. Vorzugsweise weist diese Vorrichtung zudem eine Vorrichtung zur Entfernung der Bortenbereiche im Bereich der ersten oder zweiten Transportvorrichtung auf. In dieser Ausgestaltung der Vorrichtung werden somit in der Verpackungs- bzw. Rollenstation vorzugsweise bortenfreie Glasbandabschnitte insbesondere mit einer Länge im Bereich von 100 bis 2000 m, vorzugsweise im Bereich von 100 bis 1000 m aufgerollt.

**Figurenbeschreibung**

Nachfolgend wird die Erfindung an Hand der Fig. 1 bis 13 näher erläutert. Es zeigen:

Fig. 1 die schematische Darstellung einer Ausführungsform der erfindungsgemäßen Vorrichtung in Aufsicht

Fig. 2 eine schematische Darstellung der in Fig. 1 dargestellten Ausführungsform in der Seitenansicht,

Fig. 3 die schematische Darstellung des Querschnittsprofils des Glasbandes,

Fig. 4 eine schematische Darstellung der Position und Ritzbewegung des Anritzwerkzeugs,

Fig. 5 eine schematische Darstellung eines Anritzwerkzeugs mit elastischem Arm,

Fig. 6 eine schematische Darstellung einer Weiterbildung der Erfindung mit einer zusätzlichen Führungsvorrichtung in Aufsicht,

Fig. 7 eine schematische Darstellung der in Fig. 6 gezeigten Weiterbildung in Seitenansicht,

Fig. 8 eine schematische Darstellung einer Verpackungsstation in Aufsicht,

Fig. 9 eine schematische Darstellung einer Weiterbildung der Erfindung mit Bortenabtrennung und Verpackungsstation zum Aufrollen der Bandabschnitte in Seitenansicht,

Fig. 10 den Zusammenhang zwischen Glasdicke und der Ziehgeschwindigkeit,

Fig. 11 den Zusammenhang zwischen Kühlrate und Glasdicke,

Fig. 12 schematische Darstellungen verschiedener Ausführungsformen in Seitenansicht, die sich hinsichtlich der Anordnung der Lagen $E_1$ und $E_2$ zueinander unterscheiden und

Fig. 13 eine schematische Darstellung einer Weiterbildung der Erfindung mit einer Heißformstation.

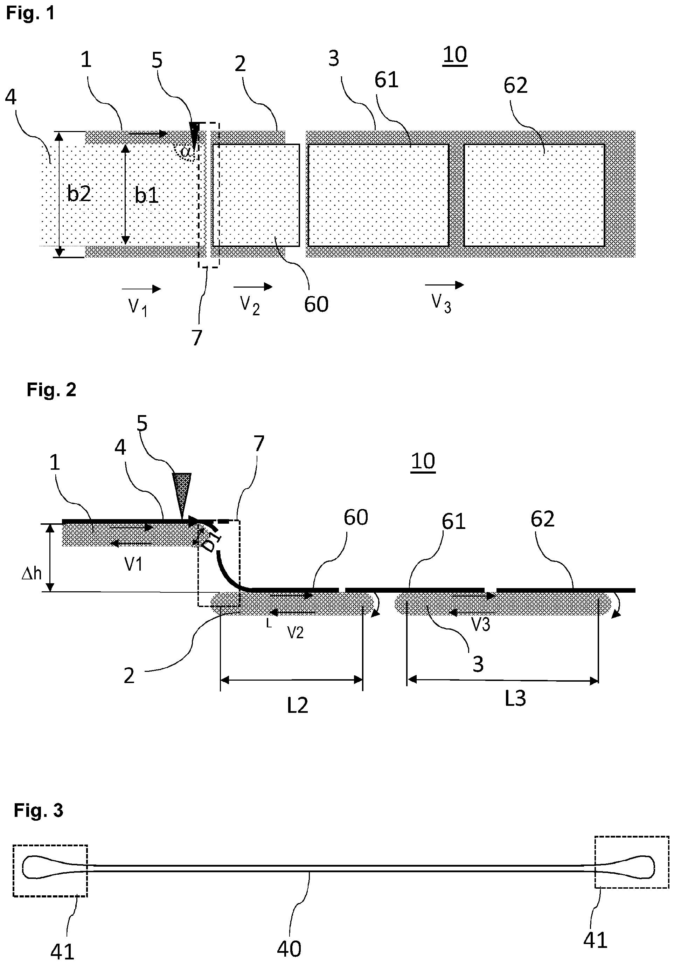

Die Fig. 1 und 2 zeigen eine schematische Darstellung einer Ausführungsform der erfindungsgemäßen Vorrichtung in Aufsicht (Fig. 1) bzw. in Seitenansicht (Fig. 2). Die Vorrichtung dieser Ausführungsform umfasst die drei Transportvorrichtungen 1, 2 und 3, welche als Gurtbänder ausgebildet sind und über Umlenkrollen geführt werden. Vorzugsweise weisen die Umlenkwalzen einen Durchmesser D1 im Bereich von 40 bis 150 mm auf. Die Gurtbänder 1, 2 und 3 weisen eine Breite $b_2$ auf, welche größer ist als die Breite $b_1$ des Glasbandes 4, so dass das Glasband 4 vollständig auf den Gurtbändern liegt. Das Glasband 4 weist eine Dicke im Bereich von 15 bis 150 $\mu$m auf, wobei die Glasdicke im Bortenbereich höher ist als in der Glasmitte und somit auch oberhalb von 150 $\mu$m liegen kann.

Die Gurtbänder 1, 2 und 3 werden voneinander unabhängig mit den Transportgeschwindigkeiten $v_1$, $v_2$ und $v_3$ angetrieben. Hierbei weisen das erste Gurtband 1 und das zweite Gurtband 2 die Geschwindigkeiten $v_1$ und $v_2$ auf. Die Geschwindigkeit $v_1$ des ersten Gurtbandes $v_1$ entspricht der Zuggeschwindigkeit der Ziehmaschine, welche das Glasband aus der Formgebung zieht (nicht dargestellt) und wird somit weitgehend durch die gewünschte Glasdicke $d_1$ des Glasbandes 4 bestimmt. Hierbei steigt die Zuggeschwindigkeit und damit auch die Geschwindigkeit $v_1$ des ersten Gurtbandes bzw. der ersten Transportvorrichtung mit abnehmender Glasdicke $d_1$ des Glasbandes 4. Die Geschwindigkeit $v_3$ des dritten Gurtbandes wird so eingestellt, dass eine Vereinzelung der Glasbandabschnitte 60, 61, 62 erfolgt und ein Anstoßen der Bruchkanten der einzelnen Glasbandabschnitte 60, 61, 62 vermieden wird. Die Geschwindigkeit $v_3$ ist daher vorzugsweise größer als die Geschwindigkeit $v_1$ des ersten Gurtbandes 1. Die Länge $L_3$ des dritten Gurtbandes 3 wird so gewählt, dass dort ausreichend Platz für Verpackungsstationen (nicht dargestellt) ist.

Am Ende der ersten Transportvorrichtung bzw. des ersten Gurtbandes 1 ist eine Anritzvorrichtung 5 so positioniert, dass das Endlosglasband 4 im Bereich der Borte auf angeritzt wird. Der Anritz verläuft hierbei rechtwinklig oder zumindest annähernd rechtwinklig zur Transportrichtung, welche auch die Hauptzugrichtung darstellt und weist insbesondere eine Länge im Bereich von 2 bis 6 mm auf.

Das erste Gurtband 1 und das zweite Gurtband 2 sind in der Höhe, d.h. in z-Richtung, versetzt angeordnet, so dass im Bereich 5, d.h. zwischen erstem Gurtband 1 und zweitem Gurtband 2 eine Stufe mit der Höhendifferenz $h_1$ gebildet wird. Durch die Höhendifferenz $\Delta h$ im Bereich 7 zwischen erstem Gurtband 1 und zweitem Gurtband 2 wird das Glasband 4 einer Biegespannung ausgesetzt, die dazu führt, dass das Glasband 4 entlang des Anritzes unter Ausbildung einer Glaskante bricht, so dass das Endlosglasband 4 in Glasbandabschnitte 60, 61, 62 vereinzelt wird. Die Länge der Glasbandabschnitte 60, 61, 62 wird durch den zeitlichen Abstand zwischen zwei Anritzprozessen bestimmt. Hierbei wird die Minimallänge der Glasbandabschnitte 60, 61, 62 durch das mit der Vorrichtung zu erreichende, kürzeste Zeitintervall zwischen zwei Anritzprozessen begrenzt. In dieses Zeitintervall geht beispielsweise die Zeiten für die Hin- und Rückfahrten des Anritzwerkzeuges, die Zeitdauer des Schneidvorgangs sowie ggfs. die Zeitdauer einer Synchronfahrt ein. Da beim erfindungsgemäßen Verfahren der Anritz lediglich eine Länge von 2 bis 6 mm aufweist, kann hier das zeitliche Intervall zwischen zwei Anritzprozessen sehr kurz gehalten werden, so dass auch sehr dünne Glasbänder 4 in relativ kurze Glasbandabschnitte 60, 61,62 verteilt werden können. Insbesondere bei Ausführungsformen, bei denen auf eine Aufsynchronisation des Werkzeugs verzichtete werden kann ist die minimale Tafellänge somit nicht länger von dem minimalen Abstand zwischen zwei Anritzen, sondern davon abhängig, welche Glasbandlänge bei dem Überführen auf die Ebene $E_2$ noch über den Radius selbständig zum Bruch führt. Die entsprechende Glasbandlänge ist wiederum abhängig von der relativen Lage der Ebenen $E_1$ und $E_2$, im gezeigten Ausführungsbeispiel somit von der Höhendifferenz der Ebenen $E_1$ und $E_2$.

Abhängig davon liegt die untere Grenze für die Länge der Glasbandabschnitte bzw. Glasplatten im Bereich von 150 bis 250 mm.

Die Biegung des Glasbandes 4 erfolgt durch sein Eigengewicht. Der Biegeradius und somit auch die Biegespannung werden in diesem Ausführungsbeispiel durch die Höhendifferenz $\Delta h$ zwischen dem ersten Gurtband 1 und dem zweiten Gurtband 2 eingestellt. Weiterhin kann eine Feineinstellung des Biegeradius und somit der Biegespannung durch das Verhältnis der Geschwindigkeiten $v_1$ und $v_2$ des ersten und des zweiten Gurtbandes 1, 2 erfolgen. Läuft das erste Gurtband 1 mit einer höheren Geschwindigkeit als das zweite Gurtband 2, so entsteht ein relativ kleiner Biegeradius und umgekehrt.

Fig. 3 stellt einen schematischen Querschnitt durch das Endlosglasband 4 dar. Das Glasband 4 weist hierbei an beiden Enden Bortenbereiche 41 mit einer erhöhten Glasdicke $d_2$ auf, während die Glasdicke $d_1$ im Mittenbereich 40 des Glasbandes wesentlich geringer ist. Vorzugsweise ist das Glas ein Aluminosilikatglas.

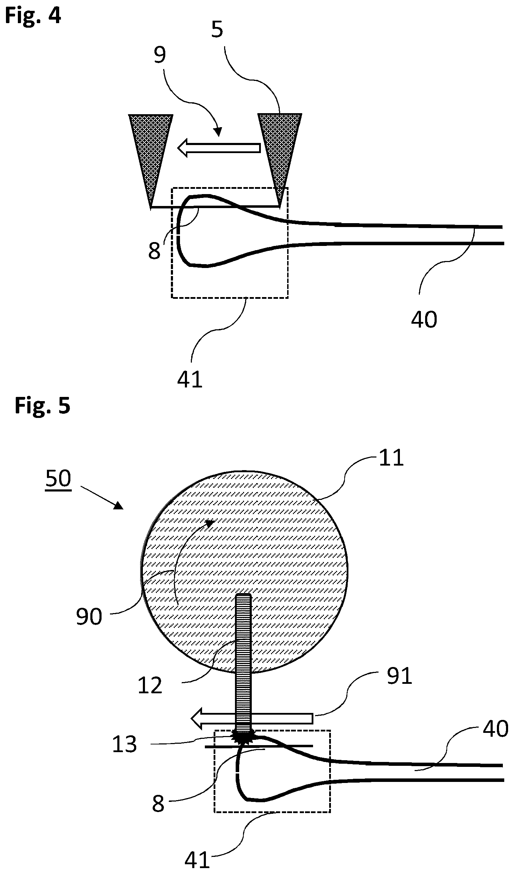

Die maximale Glasdicke im Bortenbereich kann hierbei bis zu 5 mal dicker sein als die Glasdicke $d_1$ im Mittenbereich des Glasbandes. Die Bortenbereiche 41 weisen ein asymmetrisches Querschnittsprofil auf, bei dem die Glasdicke von der Glasmitte 40 hin zu den Rändern sanft ansteigt. Gemäß einer vorteilhaften Ausgestaltung des Verfahrens wird daher das Anritzwerkzeug 5 zur Erzeugung des Anritzes 8 im Bortenbereich 41 von innen nach außen, d.h. zum Rand des Glasbandes 4 hin, geführt. Dies ist in Fig. 4 dargestellt. Der Pfeil 9 symbolisiert hierbei die Bewegungsrichtung des Anritzwerkzeugs 5 während des Ritzvorgangs.

Fig. 5 stellt schematisch eine Weiterbildung der Anritzvorrichtung 50 in Seitenansicht dar. Die Anritzvorrichtung 50 umfasst eine rotierende Scheibe 11, auf der ein elastischen Werkzeugträger 12 angeordnet ist. Am anderen Ende des als elastischer Arm ausgebildeten Werkzeugträgers 12 ist das Schneid- oder Ritzwerkzeug 13 in Form eines oder mehrerer Hartstoffelemente, beispielsweise einem Diamanten oder Diamantstaub, beziehungsweise Diamantkörnern angeordnet. Durch die Drehung der Scheibe 11 (symbolisiert durch den Pfeil 90) erzeugt das Schneidwerkzeug 13 den Anritz 8. Die Schneidbewegung wird hierbei durch den Pfeil 91 symbolisiert. Durch den elastischen Werkzeugarm des Werkzeugträgers 12 kann dieser zugleich die Transportbewegung des Glasbandes 4 ausführen, so dass der Anriss 8 über seine gesamte Länge einen Winkel $\alpha$ zur Transportrichtung des Glasbandes 4 von 90° aufweist. Somit entfällt bei Verwendung der Anritzvorrichtung 50 die Notwendigkeit einer Synchronfahrt. Eine zusätzliche, an die Bandgeschwindigkeit angepasste Winkeleinstellung des Anritzwerkezugs kann hierbei zusätzlich erfolgen. Durch den Wegfall der Synchronisationsfahrten kann die Mindestdauer zwischen zwei Anritzvorgängen weiter verkürzt und somit auch bei sehr dünnen Gläsern Glastafeln mit geringen Mindestlängen erhalten werden.

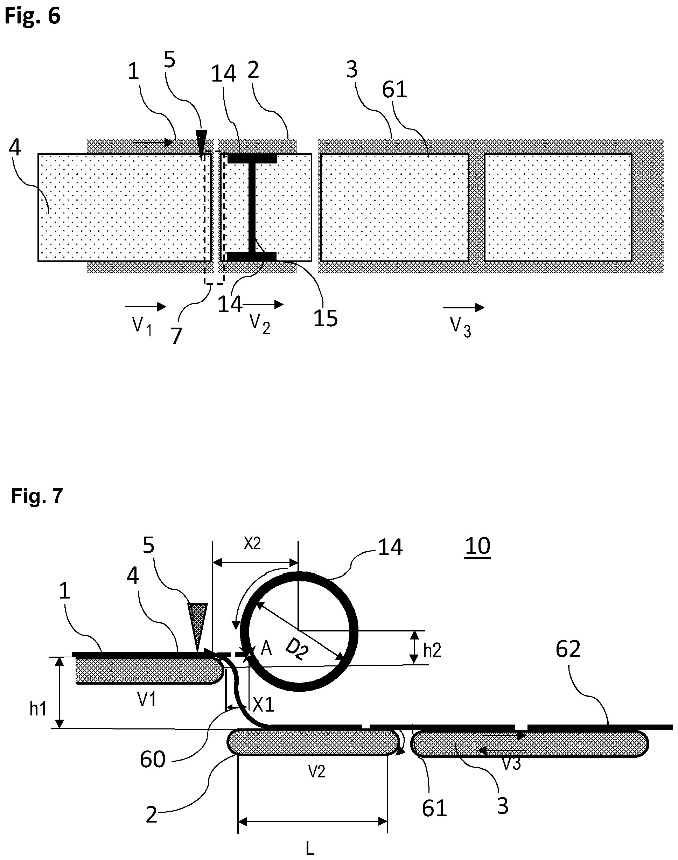

In Fig. 6 wird schematisch eine Weiterbildung der erfindungsgemäßen Vorrichtung in Aufsicht und Seitenansicht dargestellt, die zusätzlich zur Einstellung des Biegeradius Führungsräder 14 im Bereich der Glasborten aufweist. Die Führungsräder 14 sind in x-Richtung hinter der Stufe 7 angeordnet und auf der gemeinsamen Welle 15 gelagert. Die Welle 15 ist über einen eigenen Antrieb angetrieben. Die Führungsräder 14 haben hierbei eine höhere Umfangsgeschwindigkeit als das Gurtband 1, so dass es bei Berührung des Glasbandes 4 nicht zu einem Stoppimpuls kommt. Fig. 7 zeigt eine Seitenansicht der Vorrichtung. Die Welle 15 der Führungsräder kann in ihrer Höhe und ihrem Abstand zur Stufe, d.h. in x- und z- Richtung eingestellt werden. Somit können die Abstände $x_1$ und $x_2$ sowie die Höhe $h_2$ durch die Position der Führungsräder 14 bzw. der Welle 15 eingestellt werden. Der Punkt A bezeichnet hierbei den Kontaktpunkt der Glaskante mit dem Führungsrad 14. Durch das Führungsrad 14 wird eine Biegung des Glasbandes 4 mechanisch erzwungen. Somit eignet sich die in den Fig. 6 und 7 gezeigte Vorrichtung insbesondere für relativ dicke Glasbänder mit einer Dicke im Bereich von 80 bis 150 $\mu m$, bei welchen es auf Grund der hohen Steifigkeit des Glases die ohne zusätzliche mechanische Einwirkung nicht oder zumindest nicht rechtzeitig zu einer Biegung des Glases kommt.

Die in den Fig. 6 und 7 gezeigte Vorrichtung ermöglicht zudem die Einstellung des Biegeradius und damit der Biegespannung durch verschiedene Parameter. So wird die Biegespannung zum einen durch den Durchmesser $D_1$ der Umlenkrollen des ersten Gurtbandes 1 beeinflusst. Je kleiner der Durchmesser $D_1$ ist, desto größer ist die Biegespannung. Vorzugsweise liegt der Durchmesser $D_1$ im Bereich von 25 bis 150 mm.

Weiterhin kann die Biegespannung auch durch die Geschwindigkeit $v_2$ des zweiten Gurtbandes 2 gesteuert werden. Je langsamer die Transportgeschwindigkeit $v_2$ ist, desto besser kann sich das Glas an den Durchmesser $D_1$ der Umlenkrolle anlegen und desto exakter kann somit die Einstellung des Biegeradius über den Durchmesser $D_1$ der Umlenkrollen erfolgen. Dabei muss jedoch $v_2$ groß genug sein, dass eine Separation der einzelnen Glasbandabschnitte erfolgen kann.

Weiterhin kann auch durch die Höhe $h_1$ der Stufe, d.h. der Abstand der beiden Gurtbänder 1 und 2 in z-Richtung, die oben beschriebene Mindestgeschwindigkeit des zweiten Gurtbandes 2 und somit indirekt die Biegespannung eingestellt werden. Je höher $h_1$ ist, desto besser legt sich das Glas an die Umlenkrolle mit dem Durchmesser $D_1$ an und desto größer ist der zeitliche Verzug und damit der Abstand zur Vorgängertafel. Dies ermöglicht wiederum, dass die Geschwindigkeit $v_2$ verringert werden kann, dadurch kann sich das Glas noch besser an den Durchmesser $D_1$ der Umlenkrollen anlegen.

Abstand und Höhe der Welle 15 muss hierbei in einem bestimmten Verhältnis zur Kante des Glasbandes stehen. Die Höhe $h_2$ bezeichnet den Abstand der beiden Wellen von Gurtband 1 und der Führungsräder. Entspricht diese Höhe $h_2$ der Hälfte der Summe der beiden Durchmesser $D_1$ und $D_2$, d.h. gilt für die Höhe $h_2 = 0{,}5*(D_1+D_2)$, dann steht eine Tangente am untersten Punkt der Führungsräder genauso hoch, wie das Glasband 4 auf dem Gurtband 1, d.h. genauso hoch wie die Gurtbandoberfläche des ersten Glasbandes 1. Der höchstmöglichste Kontaktpunkt A für das Führungsrad 14 ist hierbei dann gegeben. Der optimale höchstmögliche Kontaktpunkt ist erreicht, wenn für die Position des Kontaktpunktes A zusätzlich gilt $0{,}5*(D_1+D_2)+x_1$. Die Verschiebung $x_1$ in horizontaler Richtung ist hierbei abhängig von der Glasdicke $d_1$ des Glasbandes 4, da ein dünnes Glas früher kontaktiert werden kann als ein dickes Glas und die Glasdicke quadratisch in die Biegespannung eingeht. So gilt beispielsweise für $x_1$:

Tabelle 1: Abhängigkeit des Abstands $x_1$ von der Glasdicke

| Glasdicke $d_1$ [$\mu$m] | $x_1$ [mm] |
|---|---|
| 150 | 245 |
| 100 | 75 |
| 75 | 75 |
| 50 | 45 |
| 30 | 30 |
| 20 | 25 |

Werden die Führungsräder 14 bzw. die Welle 15 weiter abgesenkt, so muss gleichzeitig in horizontaler Richtung $x_2$, d.h. der Abstand vom Mittelpunkt der Umlenkrolle zur Welle 15, vergrößert werden, damit $x_1$ gleichbleibt. Dabei folgt die Einstellung der Abstände $x_2$ und $h_2$ folgender Gleichung:

$$x_2 = \frac{D_1}{2} + x_1 + \sqrt{\frac{D_2^2}{4} - \left(h_2 - \frac{D_1}{2}\right)^2}$$

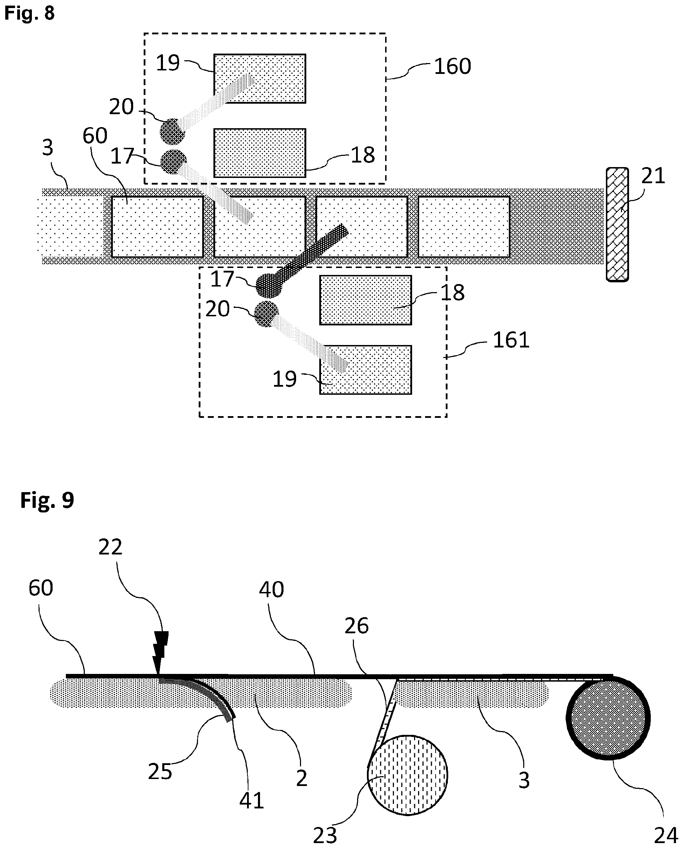

Fig. 8 zeigt einen Ausschnitt einer Ausführungsform der Vorrichtung, bei der im Bereich der dritten Transportvorrichtung 3 zwei Verpackungsstationen 160, 161 angeordnet sind. Jede Verpackungsstation 160, 161 enthält hierbei einen ersten Roboter 17 und einen zweiten Roboter 20, eine Abstapelplattform 18 und eine Papierzuführanlage 20. Der erste Roboter 17 stapelt eine Glastafel, beziehungsweise einen Glasbandabschnitt 60 von der dritten Transportvorrichtung 3 auf die Abstapelplattform 18. Anschließend platziert der zweite Roboter 20 einen Papierbogen, welchen er von der Papierzuführanlage 19 entnommen hat, auf die Glastafel 60 auf der Abstapelplattform 18. Dabei bewegt sich die Abstapelplattform nach jedem Abstapelvorgang um den Betrag der Glastafel- und Papierdicke nach unten. Hierdurch werden Glas-Papierstapel von 100 bis 500 Stück erzeugt und können nachfolgend der Endverpackung zugeführt werden. Auf Grund der hohen Transportgeschwindigkeit $v_3$ der dritten Transportvorrichtung sind in der in Fig. 8 dargestellten Ausführungsform zwei Verpackungsstationen im Bereich der dritten Transportvorrichtung 3 angeordnet. Am Ende der dritten Transportvorrichtung 3 befindet sich ein Scherbentrichter 21, durch welchen Schlechttafeln einem Sammelbehälter zugeführt werden. Der Sammelbehälter befindet sich hierbei in einer Gebäudeebene unterhalb der Fertigungsebene. Da in der Fertigungsebene ein höherer Luftdruck herrscht als in der Ebene des Sammelbehälters ist sichergestellt, dass kein Glasstaub vom Sammelbehälter in die Fertigungsebene gelangt.

In Fig. 9 wird schematisch ein Ausschnitt einer weiteren Variante der Vorrichtung in Seitenansicht dargestellt. Hier weist die Vorrichtung im Bereich der zweiten Transportvorrichtung 2 an beiden Bortenbereichen des Glasbandabschnitts 60 eine Vorrichtung zum kontinuierlichen Abtrennen der Borten aus. Die Vorrichtung 22 ist dabei vorzugsweise als Laserabtrennung ausgebildet. Die abgetrennten Borten 41 werden durch die Transportvorrichtung 25 nach unten gelenkt, während der nun bortenfreie Glasbandabschnitt 40 weiter von der zweiten Transportvorrichtung 2 zur dritten Transportvorrichtung 3 transportiert wird. Im Bereich der dritten Transportvorrichtung 3 ist eine Rollenvorrichtung 24 zum Aufrollen des Glasbandabschnitts 40 platziert. Hierbei wird der Glasbandabschnitt 40 gemeinsam mit einem Zwischenpapier 26 aufgerollt, welches von der Papierzuführung 23 bereitgestellt wird. Die in Fig. 9 dargestellte Variante ist besonders zum Aufrollen von Glasbandabschnitten mit einer Länge im Bereich 100 bis 1000 m geeignet.

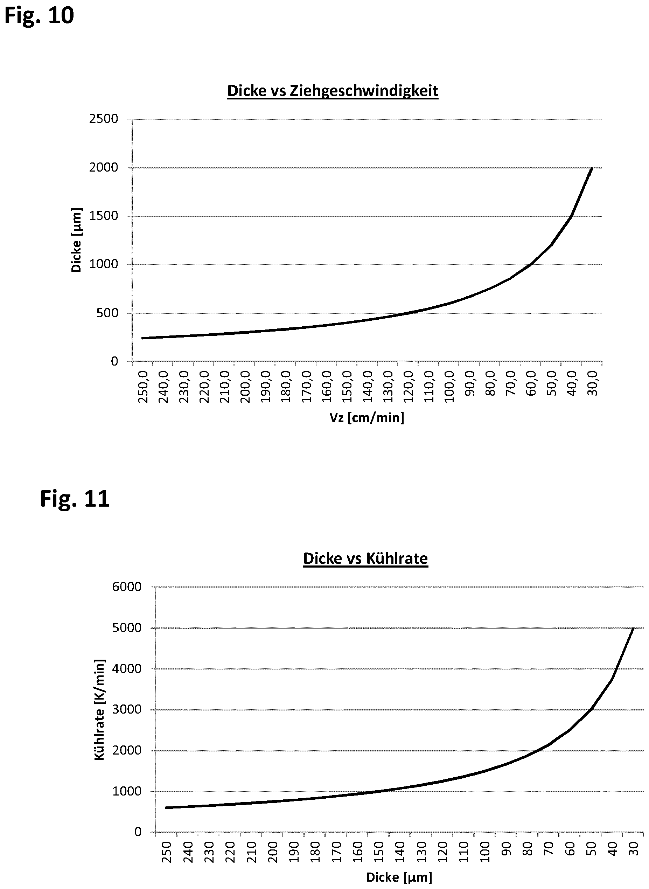

Fig. 10 verdeutlicht den Zusammenhang zwischen der gewünschten Glasdicke $d_1$ und der hierzu notwendigen Ziehgeschwindigkeit $v_z$. Die Ziehgeschwindigkeit $v_z$ entspricht hierbei der Transportgeschwindigkeit $v_1$ der ersten Transportvorrichtung. Es wird deutlich, dass mit abnehmender Glasdicke die Ziehgeschwindigkeit $v_z$ deutlich zunimmt. Dies hat zur Folge, dass sehr dünne Gläser mit sehr hohen Ziehgeschwindigkeiten $v_z$ gezogen werden müssen. Auf Grund der hohen Geschwindigkeit $v_z$ und damit auch $v_1$ sind somit kurze Prozesszeiten beim Schneidvorgang zur Herstellung kurzer Glastafeln entscheidend.

Gemäß einer Variante des erfindungsgemäßen Verfahrens durchläuft das Glasband in Anschluss an den Formgebungsprozess einen Kühlofen, bevor es auf der ersten Transportvorrichtung transportiert und angeritzt wird. Da die Ziehgeschwindigkeit $v_z$ auch im Kühlofen beibehalten werden muss, ergeben sich entsprechend für dünnere Gläser geringere Kühlzeiten als für dicke Gläser. Daher sieht eine Ausführungsform der Erfindung vor, dass die Kühlrate mit abnehmender Dicke $d_1$ des Glasbandes zunimmt. Der Zusammenhang zwischen Glasdicke $d_1$ und Kühlrate ist in Fig. 11 dargestellt.

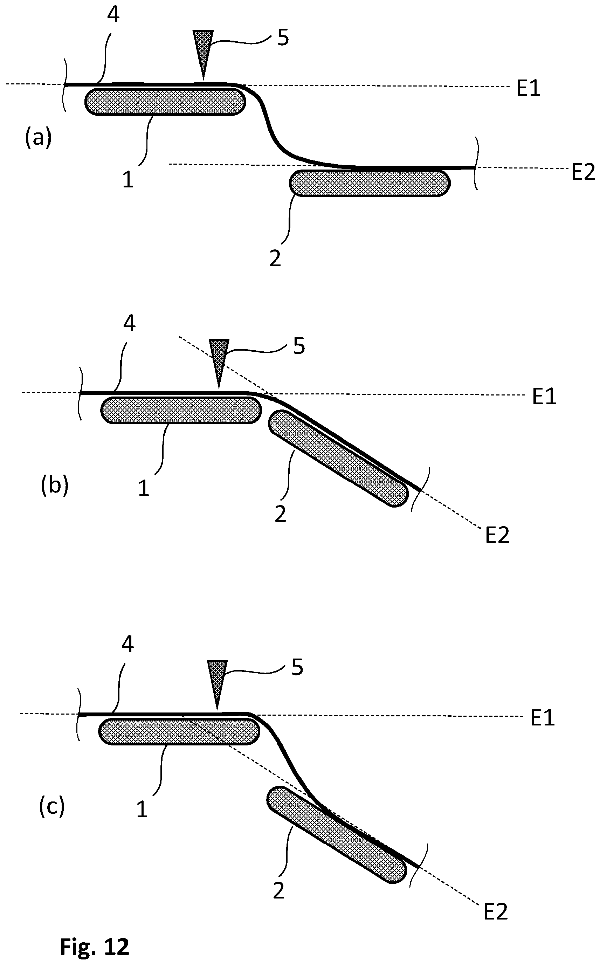

In den Fig. 12a bis 12c werden schematisch verschiedene Ausführungsformen der Vorrichtung in Seitenansicht gezeigt, welche sich hinsichtlich der Anordnung der Ebenen $E_1$ und $E_2$ zueinander unterscheiden. In Fig. 12a wird eine Vorrichtung dargestellt, bei der die beiden Ebenen $E_1$ und $E_2$ einen Höhenunterschied aufweisen, ohne dabei eine Winkeldifferenz zueinander aufzuweisen. Dagegen weisen die Ebenen $E_1$ und $E_2$ in der in Fig. 12b gezeigten Ausführungsform einen Winkeloffset auf. In der in Fig. 12 c gezeigten Ausführungsform werden Höhendifferenz und Winkeloffset der Lagen $E_1$ und $E_2$ miteinander kombiniert.

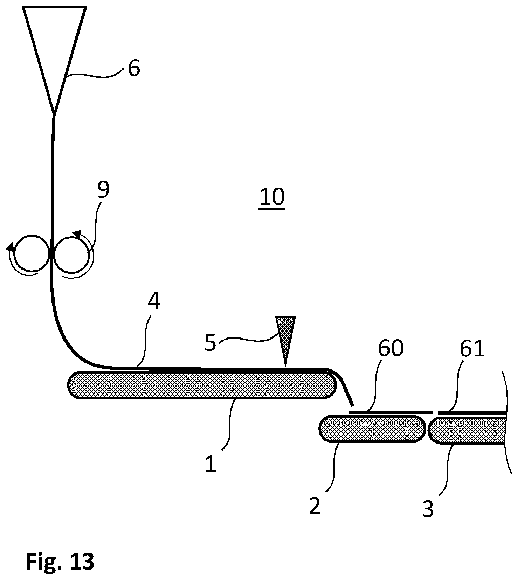

Fig. 13 zeigt schematisch eine Ausführungsform der Vorrichtung mit einer Vorrichtung zur Heißformung 6. Hierbei wird das Glasband 4 zunächst mit der Heißformvorrichtung 6 in vertikaler Richtung gezogen. Der Transport erfolgt hierbei in vertikaler Richtung durch die Zugvorrichtung 9. Nach dem Umlenken des Glasbandes 4 in die horizontale Ebene wird das Glasband mit Hilfe der ersten Transportvorrichtung 1 transportiert. Im Bereich der ersten Transportvorrichtung 1 befindet sich die Anritzvorrichtung 5 zum Einbringen eines Anritzes in zumindest einen Seitenbereich des Glasbandes.

Nachfolgend wird das Glasband 4 analog zu der in Fig. 2 beschriebenen Ausführungsform auf die zweite Transportvorrichtung 2 geleitet.

**Bezugszeichenliste**

| | |
|---|---|
| 1, 2, 3 | Transportvorrichtung |
| 4 | Glasband |
| 5 | Anritzvorrichtung |
| 6 | Heißformvorrichtung |
| 7 | Bereich zwischen 1 und 2 |
| 8 | Anritz |
| 9 | Zugvorrichtung |
| 10 | Vorrichtung zur Herstellung von Glasbandabschnitten |
| 11 | Scheibe |
| 12 | Werkzeugträger |
| 13 | Ritzwerkzeug |
| 14 | Führungsrad |
| 15 | Welle |
| 17, 20 | Roboter |
| 18 | Abstapelplattform |
| 21 | Scherbentrichter |
| 22 | Vorrichtung zum Abtrennen der Borten |
| 23 | Papierzuführung |
| 24 | Rollenvorrichtung |
| 25 | Transportvorrichtung |
| 26 | Zwischenpapier |
| 40 | Mittenbereich |
| 41 | Bortenbereich |
| 50 | Anritzvorrichtung |
| 60, 61, 62 | Glasbandabschnitt |
| 160, 161 | Verpackungsstation |

**Patentansprüche**

1. Verfahren zur Herstellung von Glasbandabschnitten (60, 61, 62) mit zumindest den folgenden Schritten:

a. Heißformen eines kontinuierlichen Glasbandes (4) mit einer vorgegebenen Glasdicke ($d_1$) im Bereich von 15 $\mu$m bis 150 $\mu$m aus einer Glasschmelze und Abkühlen des Glasbandes (4) mit einer Abkühlrate, die abhängig von der vorgegebenen Glasdicke ($d_1$) ist

b. Transport des Glasbandes (4) mit einer Geschwindigkeit $v_1$ unter Anlegen einer Zugspannung parallel zu den Seitenrändern des Glasbandes (4),

c. Umlenken der Transportrichtung in eine Ebene $E_1$,

d. Transport des Glasbandes (4) in der Ebene $E_1$

e. Einfügen eines Anritzes auf der Oberfläche des Glasbandes (4) im Bereich zumindest eines Randbereiches des Glasbandes durch Ritzen der Glasoberfläche, wobei das Anritzen durch ein Ritzwerkzeug mit einer Ritzgeschwindigkeit $V_{ritz}$ in einem Winkel $\alpha$ zur Transportrichtung des Glasbandes (4) erfolgt

f. Umlenken des Glasbandes (4) in eine Ebene $E_2$ zur Erzeugung einer Biegespannung mit einer Hauptspannungslinie und

g. Abtrennung eines Glasbandabschnittes (60, 61, 62) unter Bildung von Kanten durch Bruch des Glasbandes (4) durch spontane Risspropagation vom Anritz entlang der Hauptspannungslinie in der Verlängerung des quer zum Glasband (4) laufenden Anritzes.

2. Verfahren gemäß dem vorstehenden Anspruch, wobei das Glasband (4) so gezogen wird, dass dieses zwei Bortenbereiche aufweist, deren Dicke ($d_2$) größer als die Glasdicke ($d_1$) im Bereich der Mitte des Glasbandes ist, und wobei das Einfügen des Anritzes auf der Oberfläche des Glasbandes (4) auf zumindest einem Bortenbereich des Glasbandes erfolgt.

3. Verfahren gemäß einem der vorstehenden Ansprüche, wobei das Glasband (4) in der Ebene $E_2$ mit einer Geschwindigkeit $v_2$ transportiert wird, wobei sich die Geschwindigkeiten $v_1$ und $v_2$ bevorzugt unterscheiden und besonders bevorzugt gilt $v_1 < v_2$ und/oder wobei in einem dem Schritt g) nachfolgenden Schritt h) eine Separation des Glasbandabschnittes (60, 61, 62) vom Glasband (4) durch Transport mit einer Geschwindigkeit $v_3$ erfolgt und bevorzugt gilt $v_3 > v_1$.

4. Verfahren gemäß einem der vorstehenden Ansprüche, wobei das Ritzwerkzeug in einem Winkel $\beta$ zur Kante des Glasbandes (4) angestellt wird, wobei der Winkel $\beta$ so an die Geschwindigkeit $v_1$ sowie die Ritzgeschwindigkeit $V_{ritz}$ angepasst wird, dass gilt $\beta = \arccos(v_1/v_{ritz})$.

5. Verfahren gemäß einem der vorstehenden Ansprüche wobei das Ritzwerkzeug an einem elastischen Werkzeugträger (12) angeordnet ist und in y-Richtung mit dem Glasband (4) mitläuft, wobei bevorzugt keine Aufsynchronisation des Ritzwerkzeugs mit dem Glasband (4) erfolgt.

6. Verfahren gemäß einem der vorstehenden Ansprüche, wobei die beiden Ebenen $E_1$ und $E_2$ eine Winkeldifferenz und/oder Höhendifferenz $\Delta h$ aufweisen, bevorzugt eine Höhendifferenz $\Delta h$ im Bereich von 75 bis 225 mm und dabei keine Winkeldifferenz, wobei besonders bevorzugt die Ebene $E_2$ unterhalb der Ebene $E_1$ liegt.

7. Verfahren gemäß einem der vorstehenden Ansprüche, wobei in Schritt f) der Biegeradius des Glasbandes zusätzlich durch Kontakt des Glasbandes mit einem Führungsrad eingestellt wird, wobei der Kontaktpunkt A zwischen dem Glasband (4) und dem Führungsrad in der Ebene $E_1$ liegt und das Führungsrad vorzugsweise angetrieben ist und eine Umlaufgeschwindigkeit $v_{Rad} > v_1$ aufweist.

8. Verfahren gemäß einem der vorstehenden Ansprüche 1 bis 7, wobei in Schritt f) die Biegung des Glasbandes (4) durch dessen Eigengewicht erfolgt.

9. Verfahren gemäß einem der vorstehenden Ansprüche, wobei das Glasband (4) in Schritt a) mit einer Abkühlrate von gleich oder größer als 10 K/s, bevorzugt von gleich oder größer 25 K/s abgekühlt und/oder mit einer Abkühlrate abgekühlt wird, die im Bereich von (1/d) 5 K/(min*$\mu$m) bis 280 K/(min*$\mu$m) liegt, wobei d die Dicke des Glasbandes (4) bezeichnet, wird und/oder in Schritt a) das Abkühlen in einem Kühlofen, insbesondere mit Heizelementen erfolgt.

10. Verfahren gemäß einem der vorstehenden Ansprüche, wobei in einem dem Schritt f) nachgelagerten Schritt i) die Bortenbereiche des Glasbandabschnittes (60, 61, 62) entfernt werden, vorzugsweise durch Laserschnitt und wobei bevorzugt der in Schritt g) erhaltene Glasbandabschnitt (60, 61, 62) eine Länge im Bereich von 100 bis 2000 m, vorzugsweise im Bereich von 100 bis 1000 m aufweist und das Glasbandabschnitt (60, 61, 62) in einem dem Schritt h) nachfolgenden Schritt k) gemeinsam mit einem Papierband aufgerollt wird.

**11.** Vorrichtung (10) zur Herstellung von Glasbandabschnitten (60, 61, 62), insbesondere zur Durchführung des Verfahrens gemäß einem der vorstehenden Ansprüche, umfassend

- zumindest zwei Transportvorrichtungen (1, 2) für ein Glasband (4), wobei die Transportvorrichtungen (1, 2) eine Breite $b_1$ aufweisen, die größer als die Breite $b_2$ des Glasbandes (4) ist,
- die zweite Transportvorrichtung (2) in Zugrichtung hinter der ersten Transportvorrichtung (1) angeordnet ist und die Transportrichtung des Glasbandes (4) von der ersten Transportvorrichtung (1) zur zweiten Transportvorrichtung (2) verläuft,
- wobei die einzelnen Transportvorrichtungen (1, 2) unabhängig voneinander angetrieben werden,
- mindestens eine Vorrichtung zum Anritzen des Glasbandes im Bereich der ersten Transportvorrichtung, wobei die Vorrichtung so ausgerichtet ist, dass der Anritz in einem Winkel $\alpha$ im Bereich von 80 bis 100° zur Transportrichtung der ersten Transportvorrichtung erfolgt,
- wobei die erste und die zweite Transportvorrichtung (2) so zueinander angeordnet sind, dass das Glasband (4) beim Übergang von der ersten zur zweiten Transporteinheit einer Biegespannung ausgesetzt wird.

**12.** Vorrichtung gemäß Anspruch 11, wobei die erste Transportvorrichtung (1) und die zweite Transportvorrichtung (2) sich in ihrer Lage unterscheiden und bevorzugt eine Winkeldifferenz und/oder eine Höhendifferenz $\Delta h$, besonders bevorzugt eine Höhendifferenz $\Delta h$ im Bereich von 75 bis 225 mm und keine Winkeldifferenz, aufweisen.

**13.** Vorrichtung gemäß einem der zwei vorstehenden Ansprüche, wobei die Vorrichtung zum Anritzen des Glasbandes in einem Winkel $\beta$ zur Transportrichtung des Glasbandes auf das Glasband (4) aufgesetzt wird, wobei für den Winkel $\beta$ gilt: $\beta = \arccos(v_1/v_{ritz})$, mit $v_{ritz}$ als Ritzgeschwindigkeit der Anritzvorrichtung und $v_1$ als Transportgeschwindigkeit der ersten Transportvorrichtung (1).

**14.** Vorrichtung gemäß einem der vorstehenden Ansprüche 11 bis 13, wobei die Vorrichtung zum Anritzen des Glasbandes ein Ritzwerkzeug (13) zum Anritzen auf einen elastischen Werkzeugträger (12) umfasst, wobei der elastische Werkzeugträger (12) auf einer rotierenden Scheibe (11) angeordnet ist, wobei der elastische Werkzeugträger (12) vorzugsweise als elastischer Arm ausgebildet ist und/oder das Ritzwerkzeug (12) zum Anritzen in Form eines Diamanten oder als Diamantstaub auf dem Werkzeugträger (12) angeordnet ist.

**15.** Vorrichtung gemäß einem der vorstehenden Ansprüche 11 bis 14, wobei die Vorrichtung am Ende der ersten Transportvorrichtung (1) eine Umlenkvorrichtung, umfassen zumindest zwei Führungsräder (14) und eine Welle (15), zum Umlenken des Glasbandes (4) aufweist, wobei die Umlenkvorrichtung einen Antrieb aufweist und eine 360°-Drehbewegung mit einer Drehbewegung parallel zur Transportrichtung der zweiten Transportvorrichtung (2) ausführt und sich mit einer Umlaufgeschwindigkeit $v_{Rad}$ dreht, wobei die Umlenkvorrichtung in der Vorrichtung so ausgebildet ist, dass das Glasband (4) durch Kontakt mit der Umlenkvorrichtung nach unten geführt wird und wobei bevorzugt die Umlenkvorrichtung so in der Vorrichtung angebracht ist, dass die Position der Umlenkvorrichtung in der Vorrichtung in x- und z-Richtung variiert werden kann.

**16.** Vorrichtung gemäß einem der vorstehenden Ansprüche 11 bis 15, wobei die Vorrichtung eine Vorrichtung zur Abtrennung von Glasborten (41) vom Glasband (4), bevorzugt mittels Lasertrennung, aufweist und bevorzugt die Vorrichtung zur Abtrennung der Glasborten (41) im Bereich der zweiten Transportvorrichtung (2) angeordnet ist und wobei bevorzugt Vorrichtung im Bereich der dritten Transportvorrichtung (3) eine Rollenstation zum Aufrollen des Glasbandabschnittes (60, 61, 62) aufweist, wobei die Rollenstation eine Papierzuführstation umfasst und derart ausgebildet ist, dass der Glasbandabschnitt (60, 61, 62) gemeinsam mit einem Zwischenlagenpapier zu einer Rolle aufgerollt wird.

**17.** Vorrichtung gemäß einem der vorstehenden Ansprüche 11 bis 15, wobei die Vorrichtung im Bereich der dritten Transportvorrichtung (3) zumindest zwei Verpackungsstationen (160, 161) umfassend jeweils eine Abstapelplattform (18), eine Vorrichtung (23) zum Zuführen von Papier sowie zumindest einen ersten und einen zweiten Roboter (17, 20) aufweist, wobei der erste Roboter (17) dazu ausgebildet ist, die Glasbandabschnitte (60, 61, 62) von der dritten Transportvorrichtung (3) zur Abstapelplattform (18) zu transportieren und der zweite Roboter (20) dazu ausgebildet ist, Papierbögen (26) von der Vorrichtung zum Zuführen von Papier zur Abstapelplattform (18) zu transportieren und wobei bevorzugt der erste Roboter (17) zur Aufnahme des Glasbandabschnittes (60, 61, 62) eine poröse Platte, besonders bevorzugt eine poröse Kunststoffplatte, aufweist, an welche ein Vakuum angelegt wird.

**Fig. 1**

**Fig. 2**

**Fig. 3**

**Fig. 4**

**Fig. 5**

**Fig. 6**

**Fig. 7**

**Fig. 8**

**Fig. 9**

## Fig. 10

**Dicke vs Ziehgeschwindigkeit**

Dicke [µm] vs Vz [cm/min]

## Fig. 11

**Dicke vs Kühlrate**

Kühlrate [K/min] vs Dicke [µm]

**Fig. 12**

**Fig. 13**

Europäisches Patentamt
European Patent Office
Office européen des brevets

## EUROPÄISCHER RECHERCHENBERICHT

**Nummer der Anmeldung**

**EP 21 18 2851**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 6 502 423 B1 (OSTENDARP HEINRICH [DE] ET AL) 7. Januar 2003 (2003-01-07) * Abbildung 2 * ----- | 1-17 | INV. B65G49/06 C03B27/04 C03B33/023 C03B33/033 |
| X,D | DE 10 2014 013262 A1 (SCHOTT AG [DE]) 10. März 2016 (2016-03-10) * Absätze [0034], [0035]; Abbildungen 3a,3b * ----- | 1-11, 13-17 | |
| X | JP S58 104030 A (FUJI PHOTO FILM CO LTD) 21. Juni 1983 (1983-06-21) * Abbildungen 1,2 * ----- | 1-17 | |
| X | WO 2019/055751 A1 (CORNING INC [US]) 21. März 2019 (2019-03-21) * Abbildung 15B * ----- | 1-17 | |

**RECHERCHIERTE SACHGEBIETE (IPC)**

B65G
C03B

Der vorliegende Recherchenbericht wurde für alle Patentansprüche erstellt

| Recherchenort | Abschlußdatum der Recherche | Prüfer |
|---|---|---|
| **Den Haag** | **9. Dezember 2021** | **Marrec, Patrick** |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**                    EP 21 18 2851

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

09-12-2021

| Im Recherchenbericht angeführtes Patentdokument | Datum der Veröffentlichung | Mitglied(er) der Patentfamilie | Datum der Veröffentlichung |
|---|---|---|---|
| US 6502423 B1 | 07-01-2003 | DE 19918936 A1 | 02-11-2000 |
| | | EP 1048621 A2 | 02-11-2000 |
| | | JP 2000335928 A | 05-12-2000 |
| | | KR 20010049290 A | 15-06-2001 |
| | | TW 593176 B | 21-06-2004 |
| | | US 6502423 B1 | 07-01-2003 |
| DE 102014013262 A1 | 10-03-2016 | DE 102014013262 A1 | 10-03-2016 |
| | | JP 2016056085 A | 21-04-2016 |
| | | US 2016068424 A1 | 10-03-2016 |
| JP S58104030 A | 21-06-1983 | KEINE | |
| WO 2019055751 A1 | 21-03-2019 | CN 111183121 A | 19-05-2020 |
| | | JP 2020534235 A | 26-11-2020 |
| | | KR 20200054252 A | 19-05-2020 |
| | | TW 201920020 A | 01-06-2019 |
| | | US 2020290918 A1 | 17-09-2020 |
| | | WO 2019055751 A1 | 21-03-2019 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102014013262 A1